# EUROPÄISCHE PATENTSCHRIFT

(11) **EP 2 655 254 B1**
(45) Veröffentlichungstag und Bekanntmachung des Hinweises auf die Patenterteilung: **10.10.2018**
(21) Anmeldenummer: 11805483.2
(22) Anmeldetag: 20.12.2011
(51) Int. Cl.: C01B 33/04, C01B 33/107

(54) **VERFAHREN ZUR HERSTELLUNG VON HYDRIDOSILANEN**
PROCESS FOR PREPARING HYDRIDOSILANES
PROCÉDÉ DE PRODUCTION D'HYDRUROSILANES

(30) Priorität: 22.12.2010 DE 102010063823
(43) Veröffentlichungstag der Anmeldung: 30.10.2013
(73) Patentinhaber: Evonik Degussa GmbH, 45128 Essen (DE)
(72) Erfinder: BRAUSCH, Nicole, 45130 Essen (DE); HAUBROCK, Jens, 48249 Dülmen (DE); KNIPPENBERG, Udo, 45772 Marl (DE); SCHWÄRTZKE, Thorsten, 45772 Marl (DE); ZÖLLNER, Jörg, 45657 Recklinghausen (DE); WIEBER, Stephan, 76137 Karlsruhe (DE)
(86) Internationale Anmeldenummer: PCT/EP2011/073337
(87) Internationale Veröffentlichungsnummer: WO 2012/084897

(56) Entgegenhaltungen:
- EP-A1- 2 006 250
- WO-A1-2008/051328
- WO-A1-2011/061088
- GB-A- 2 077 710

## Beschreibung

Die Erfindung betrifft ein Verfahren zur Herstellung von Hydridosilanen aus Halogensilanen.

Hydridosilane bzw. ihre Gemische sind in der Literatur als mögliche Edukte für die Erzeugung von Siliciumschichten beschrieben. Dabei sind unter Hydridosilanen Verbindungen zu verstehen, die im Wesentlichen lediglich Silicium- und Wasserstoffatome enthalten. Hydridosilane können gasförmig, flüssig oder fest sein und sind - im Falle von Feststoffen - im Wesentlichen löslich in Lösemitteln wie Toluol oder Cyclohexan oder in flüssigen Silanen wie Cyclopentasilan. Als Beispiele seien Monosilan, Disilan, Trisilan, Cyclopentasilan und Neopentasilan genannt. Hydridosilane mit mindestens drei bzw. vier Siliciumatomen können eine lineare, verzweigte oder (ggf. bi-/poly-)cyclische Struktur mit Si-H-Bindungen aufweisen und lassen sich durch die jeweiligen generischen Formeln SiₙH₂ₙ₊₂ (linear bzw. verzweigt; mit n ≥ 2), SiₙH₂ₙ (cyclisch; mit n ≥ 3) oder SiₙH₂₍ₙ₋ᵢ₎ (bi- bzw. polycyclisch; n ≥ 4; i = {Zahl der Cyclen} - 1) beschreiben.

Viele Verfahren zur Herstellung von Hydridosilanen beruhen auf einer Dehydropolymerisationsreaktion von niederen Hydridosilanen, insbesondere SiH₄, zu höheren Silanen unter formaler H₂-Abspaltung. Die Dehydropolymerisationsreaktion kann dabei 1) thermisch (US 6,027,705 A für den Fall, dass kein Katalysator eingesetzt wird) und/oder 2) durch Einsatz von Katalysatoren wie a) elementaren Übergangsmetallen (heterogene Katalyse; US 6,027,705 A für den Fall, dass Platingruppen-Metalle, d.h. Ru, Rh, Pd, Os, Ir, Pt, eingesetzt werden; US 5,700,400 A für Metalle der Gruppe 3B - 7B und 8 - d.h. die Übergangsmetalle/Lanthanide ohne Cu- und Zn-Gruppe), b) Nichtmetalloxiden (heterogene Katalyse; US 6,027,705 A für den Fall, dass Al₂O₃ oder SiO₂ eingesetzt werden), c) hydridischen Cyclopentadienyl-Komplexen von Scandium, Yttrium oder seltenen Erden (homogene Katalyse; US 4,965,386 A, US 5,252,766 A), d) Übergangsmetall-Komplexen (homogene Katalyse; US 5,700,400 A für Komplexe der Metalle der Gruppe 3B - 7B und 8 - d.h. die Übergangsmetalle/Lanthanide ohne Cu- und Zn-Gruppe; JP 02-184513 A) oder e) bestimmten auf einem Träger immobilisierten Übergangsmetallen (heterogene Katalyse; US 6,027,705 A für den Fall, dass Platingruppen-Metalle auf einem Träger wie z. B. SiO₂ eingesetzt werden, US 5,700,400 A für auf Kohlenstoff, SiO₂ oder Al₂O₃ immobilisiertes Ruthenium, Rhodium, Palladium oder Platin) oder Übergangsmetallkomplexen (heterogene Katalyse, US 6,027,705 A für den Fall, dass Platingruppen-Metallkomplexe auf einem Träger wie z. B. SiO₂ eingesetzt werden) durchgeführt werden. All diese Verfahren weisen jedoch den Nachteil auf, dass die eingesetzten niederen Hydridosilane selbst erst aufwändig hergestellt werden müssen. Weiterhin ist an diesen Verfahren nachteilig, dass sie aufgrund der Selbstentzündlichkeit der Edukte einen hohen apparativen Aufwand erfordern. Schließlich konnten mit diesen Verfahren bislang keine ausreichend hohen Ausbeuten realisiert werden. Weiterhin ist eine aufwändige Reinigung erforderlich.

Ein anderes Verfahren zur Herstellung von Hydridosilanen, bei dem Dihalosilane, ggf. zusammen mit Trihalosilanen und/oder Tetrahalosilanen, auf elektrochemischem Wege umgesetzt werden, beschreibt z. B. EP 0 673 960 A1. Auch dieses Verfahren hat jedoch den Nachteil, dass es aufgrund der elektrochemischen Reaktionsführung einen hohen apparativen Aufwand und weiterhin hohe Energiedichten erfordert. Schließlich sind auch hier zuvor die jeweiligen Di- bzw. Trihalosilane erst aufwändig herzustellen.

Alternativ können höhere Hydridosilane auch durch Dehalogenierung und Polykondensation von Halosilanen mit Alkalimetallen hergestellt werden (GB 2 077 710 A). Auch dieses Verfahren führt jedoch zu nicht ausreichend hohen Ausbeuten. Weiterhin ist dies Verfahren nur wenig selektiv.

A. Kaczmarczyk et al., J. Inorg. Nucl. Chem., 1964, Vol. 26, 421-425 bzw. G. Urry, J. Inorg. Nucl. Chem., 1964, Vol. 26, 409-414 lehren den katalytischen Aufbau höherer Chlorsilane aus niederen Chlorsilanen, insbesondere den Aufbau von Pentasiliciumdodekachlorid (dem Chloranalogen von Neopentasilan, Si(SiH₃)₄). So lehrt A. Kaczmarczyk et al., J. Inorg. Nucl. Chem., 1964, Vol. 26, 421-425 die Synthese von Pentasiliciumdodekachlorid aus Hexachlordisilan unter Entstehung von Tetrachlorsilan. Weiterhin wird dort beschrieben, dass bei einem entsprechenden Einsatz von Octachlortrisilan Pentasiliciumdodekachlorid und Hexachlordisilan entsteht. Bei dem dort eingesetzten Katalysator handelt es sich um Trimethylamin. G. Urry, J. Inorg. Nucl. Chem., 1964, Vol. 26, 409-414 lehren die trimethylaminkatalysierte Synthese von Pentasiliciumdodekachlorid aus Hexachlordisilan unter Entstehung von Tetrachlorsilan bzw. aus Octachlortrisilan unter Entstehung von Hexachlordisilan. Die Hydrierung der Produkte zu Hydridosilanen wird dort nicht beschrieben. Weiterhin werden nach diesen Verfahren nicht zufrieden stellende Ausbeuten an höheren Perchlorsilanen erreicht. Darüber hinaus ist bei der Synthesevariante einsetzend Octachlortrisilan nachteilig, dass das entstehende Nebenprodukt Hexachlordisilan im Gegensatz zu dem bei der auf Hexachlordisilan basierenden Verfahrensvariante entstehenden Tetrachlorsilan bei Raumtemperatur und Normaldruck nicht leicht flüchtig ist und somit nicht abgezogen, sondern aufwändig abdestilliert werden muss.

WO 2008/051328 A1 lehrt, zur Erzeugung Neopentasilan-haltiger Zusammensetzungen ein Hexahalodisilan der Formel X₃SiSiX₃ mit einem tertiären Aminkatalysator unter Bildung einer ersten Mischung umfassend Tetrakis(trihalosilyl)silan (Si(SiX₃)₄) und Tetrahalosilan umzusetzen. Die beiden Hauptbestandteile Tetrakis(trihalosilyl)silan und Tetrahalosilan können voneinander separiert werden. Das erhaltene Tetrakis(trihalosilyl)silan kann durch Hydrierung mit Diisobutylaluminiumhydrid in Neopentasilan (Si(SiH₃)₄) umgewandelt werden. Doch auch dieses Verfahren führt aufgrund der Reaktionsgleichung (4 Si₂Cl₆ → Si₅Cl₁₂ + 3 SiCl₄) noch nicht zu zufrieden stellenden Ausbeuten.

Die DE 10 2009 053 804 beschreibt Verfahren zur Herstellung von Hydridosilanen in höherer Ausbeute, insbesondere Neopentasilan. Bei diesem Verfahren wird
a)
   i) mindestens ein Halogensilan der generischen Formel SiₙX₂ₙ₊₂ (mit n ≥ 3 und X = F, Cl, Br und/oder I) und
   ii) mindestens ein Katalysator der generischen Formel

      NRR'ₐR"_{b}Y_{c}

      mit a = 0 oder 1, b = 0 oder 1, und c = 0 oder 1, und
      Y = 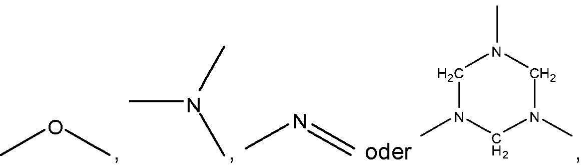 wobei
      aa) - R, R' und/oder R" gleich -C₁-C₁₂-Alkyl, -C₁-C₁₂-Aryl, -C₁-C₁₂-Aralkyl, -C₁-C₁₂-Aminoalkyl, -C₁-C₁₂-Aminoaryl, -C₁-C₁₂-Aminoaralkyl, insbesondere bevorzugt -Ph, -PhCH₃, -PhC₂H₅, -PhC₃H₇, -CH₂(C₆H₄)CH₃, -CH₂(C₆H₄)C₂H₅, -C₂H₄(C₆H₄)C₂H₅, -C₂H₄(C₆H₄)C₃H₇, -C₃H₆(C₆H₄)-C₃H₇, -C₆H₂(CH₃)₃, -C₆H₃(CH₃)₂, -C₈H₇, -C₈H₆CH₃, -PhNR"'R"", -PhCH₂NR"'R"", -PhC₂H₄NR'"R"", -PhC₃H₆NR'"R"", -CH₂(C₆H₄)CH₂NR'"R"", -CH₂(C₆H₄)C₂H₄NR'"R"", -C₂H₄(C₆H₄)C₂H₄NR"'R"", -C₂H₄(C₆H₄)C₃H₆NR"'R"", -C₃H₆(C₆H₄)-C₃H₆NR'"R"", -CH₂NR'"R"", -C₂H₄NR'"R"", -C₃H₆NR'"R"",-C₄H₈NR'"R"", -C₅H₁₀NR'"R"", -C₆H₁₂NR'"R"", -C₇H₁₄NR'"R"",-C₈H₁₆NR'"R"", -C₉H₁₈NR'"R"" und/oder -C₁₀H₂₀NR"'R"" (mit R'" und R"" = -C₁-C₁₀-Alkyl, -C₁-C₁₀-Aryl und/oder -C₁-C₁₀-Aralkyl) sind, und/oder
         - zwei oder drei Reste R, R' und R" im Falle von c = 0 gemeinsam ein N einschließendes cyclisches oder bicyclisches, heteroaliphatisches oder heteraromatisches System bilden,
            insbesondere handelt es sich dabei bevorzugt bei dem cyclischen oder bicyclischen, heteroaliphatischen oder heteraromatischen System um ein Pyrrolidin-, Pyrrol-, Piperidin-, Pyridin-, Hexamethylenimin-, Azatropiliden- oder ein Chinolin-Ringsystem,
         - mit der Maßgabe, dass mindestens ein Rest R, R' oder R" nicht -CH₃ ist
         und/oder
      bb) - R und R' und/oder R" (im Falle von c = 1) gleich -C₁-C₁₂-Alkylen, -C₁-C₁₂-Arylen, -C₁-C₁₂-Aralkylen, -C₁-C₁₂-Heteroalkylen, -C₁-C₁₂-Heteroarylen, -C₁-C₁₂-Heteroaralkylen und/oder-N=, insbesondere bevorzugt -CH₂-, -C₂H₄-, -C₃H₆-, -C₄H₈-, -C₅H₁₀-, -C₆H₁₂-,-C₇H₁₄-, -C₈H₁₆-, -C₉H₁₈-, -C₁₀H₂₀-, -Ph-, -PhCH₂-, -PhC₂H₄-, -PhC₃H₆-, -CH₂(C₆H₄)CH₂-, -CH₂(C₆H₄)C₂H₄-, -C₂H₄(C₆H₄)C₂H₄-, -C₂H₄(C₆H₄)C₃H₆-, -C₃H₆(C₆H₄)C₃H₆-, -C₆H(CH₃)₃-, -C₆H₂(CH₃)₂-, -CH=, -CH=CH-, -N=,-N=CH- und/oder -CH=N-, ist,
         oder
      cc) - (im Falle von a = b = c = 0) R = ≡C-R'" (mit R'" = -C₁-C₁₀-Alkyl, -C₁-C₁₀-Aryl und/oder -C₁-C₁₀-Aralkyl) ist,
      unter Bildung eines Gemisches umfassend mindestens ein Halogensilan der generischen Formel SiₘX₂ₘ₊₂ (mit m > n und X = F, Cl, Br und/oder I) und SiX₄ (mit X = F, Cl, Br und/oder I) umgesetzt,
      und
b) das mindestens eine Halogensilan der generischen Formel SiₘX₂ₘ₊₂ unter Bildung eines Hydridosilans der generischen Formel SiₘH₂ₘ₊₂ hydriert.

Nachteilig an diesem Verfahren ist, dass trotz Angabe eines primären Reaktionsprodukts der generischen Formel SiₘH₂ₘ₊₂ (mit m > 3) ein Gemisch von Hydridosilanen dieser generischen Formel mit partiell halogenierten Hydridosilanen der generischen Formal SiₘH_{(2m+2-y)}X_{y} entsteht (mit 1 < y < 2m+1). Diese partiell halogenierten Hydridosilane sind nachteilig für die weitere Verarbeitung, insbesondere für die Herstellung von siliciumhaltigen Schichten, die bevorzugt in der Optoelektronik eingesetzt werden, da Restchloranteile in der Schicht zu verminderten elektrischen Eigenschaften führen.

Es ist somit die Aufgabe der vorliegenden Erfindung, das in DE 10 2009 053 804 beschriebene Verfahren derart zu optimieren, dass die beschriebenen Nachteile vermieden werden.

Diese Aufgabe wird vorliegend durch ein Verfahren gelöst, bei dem
a)
   i) mindestens ein Halogensilan der generischen Formel SiₙX₂ₙ₊₂ (mit n ≥ 3 und X = F, Cl, Br und/oder I) und
   ii) mindestens ein Katalysator der generischen Formel

      NRR'ₐR"_{b}Y_{c}

      mit a = 0 oder 1, b = 0 oder 1, und c = 0 oder 1, und
      Y = 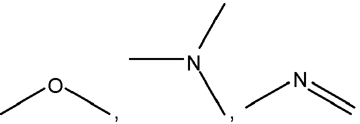 oder 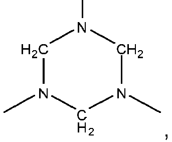 wobei
      aa) - R, R' und/oder R" gleich -C₁-C₁₂-Alkyl, -C₁-C₁₂-Aryl, -C₁-C₁₂-Aralkyl, -C₁-C₁₂-Aminoalkyl, -C₁-C₁₂-Aminoaryl, -C₁-C₁₂-Aminoaralkyl, insbesondere bevorzugt -Ph, -PhCH₃, -PhC₂H₅, -PhC₃H₇, -CH₂(C₆H₄)CH₃, -CH₂(C₆H₄)C₂H₅, -C₂H₄(C₆H₄)C₂H₅, -C₂H₄(C₆H₄)C₃H₇, -C₃H₆(C₆H₄)-C₃H₇, -C₆H₂(CH₃)₃, -C₆H₃(CH₃)₂, -C₈H₇, -C₈H₆CH₃, -PhNR"'R"", -PhCH₂NR"'R"", -PhC₂H₄NR'"R"", -PhC₃H₆NR'"R"", -CH₂(C₆H₄)CH₂NR'"R"", -CH₂(C₆H₄)C₂H₄NR'"R"", -C₂H₄(C₆H₄)C₂H₄NR"'R"", -C₂H₄(C₆H₄)C₃H₆NR"'R"", -C₃H₆(C₆H₄)-C₃H₆NR'"R"", -CH₂NR'"R"", -C₂H₄NR'"R"", -C₃H₆NR'"R"",-C₄H₈NR'"R"", -C₅H₁₀NR'"R"", -C₆H₁₂NR'"R"", -C₇H₁₄NR"'R"",-C₈H₁₆NR'"R"", -C₉H₁₈NR'"R"" und/oder-C₁₀H₂₀NR'"R"" (mit R'" und R"" = -C₁-C₁₀-Alkyl, -C₁-C₁₀-Aryl und/oder -C₁-C₁₀-Aralkyl) sind, und/oder
         - zwei oder drei Reste R, R' und R" im Falle von c = 0 gemeinsam ein N einschließendes cyclisches oder bicyclisches, heteroaliphatisches oder heteraromatisches System bilden,
            insbesondere handelt es sich dabei bevorzugt bei dem cyclischen oder bicyclischen, heteroaliphatischen oder heteraromatischen System um ein Pyrrolidin-, Pyrrol-, Piperidin-, Pyridin-, Hexamethylenimin-, Azatropiliden- oder ein Chinolin-Ringsystem,
         - mit der Maßgabe, dass mindestens ein Rest R, R' oder R" nicht -CH₃ ist und/oder
      bb)- R und R' und/oder R" (im Falle von c = 1) gleich -C₁-C₁₂-Alkylen, -C₁-C₁₂-Arylen, -C₁-C₁₂-Aralkylen, -C₁-C₁₂-Heteroalkylen, -C₁-C₁₂-Heteroarylen, -C₁-C₁₂-Heteroaralkylen und/oder -N=,
         insbesondere bevorzugt -CH₂-, -C₂H₄-, -C₃H₆-, -C₄H₈-, -C₅H₁₀-, -C₆H₁₂-,-C₇H₁₄-, -C₈H₁₆-, -C₉H₁₈-, -C₁₀H₂₀-, -Ph-, -PhCH₂-, -PhC₂H₄-, -PhC₃H₆-, -CH₂(C₆H₄)CH₂-, -CH₂(C₆H₄)C₂H₄-, -C₂H₄(C₆H₄)C₂H₄-, -C₂H₄(C₆H₄)C₃H₆-, -C₃H₆(C₆H₄)C₃H₆-, -C₆H(CH₃)₃-, -C₆H₂(CH₃)₂-, -CH=, -CH=CH-, -N=,-N=CH- und/oder -CH=N-, ist,
         oder
      cc) - (im Falle von a = b = c = 0) R = ≡C-R'" (mit R'" = -C₁-C₁₀-Alkyl, -C₁-C₁₀-Aryl und/oder -C₁-C₁₀-Aralkyl) ist,
      unter Bildung eines Gemisches umfassend mindestens ein Halogensilan der generischen Formel SiₘX₂ₘ₊₂ (mit m > n und X = F, Cl, Br und/oder I) und SiX₄ (mit X = F, Cl, Br und/oder I) umgesetzt wird,
b) das mindestens eine Halogensilan der generischen Formel SiₘX₂ₘ₊₂ unter Bildung eines Hydridosilans der generischen Formel SiₘH₂ₘ₊₂ hydriert wird,
c) das Hydridosilan der generischen Formel SiₘH₂ₘ₊₂ von partiell halogenierten Hydridosilanen der allgemeinen Formel SiₘH_{(2m+2-y)}X_{y} (mit 1 < y < 2m+1) abgetrennt wird und
d) optional die in Schritt c) abgetrennten partiell halogenierten Hydridosilane der allgemeinen Formel SiₘH_{(2m+2-y)}X_{y} (mit 1 < y < 2m+1) erneut hydriert werden.

Bei dem bei dem erfindungsgemäßen Verfahren eingesetzten Halogensilan handelt es sich um eine Verbindung, die im Wesentlichen nur aus Siliciumatomen und Halogenatomen (Halogen = Fluor, Chlor, Brom, lod) besteht und die mindestens drei Siliciumatome aufweist. Halogensilane der generischen Formel SiₙX₂ₙ₊₂ mit mindestens drei bzw. vier Siliciumatomen können eine lineare oder verzweigte Struktur aufweisen.

Besonders gut für das erfindungsgemäße Verfahren einsetzbar sind lineare Halogensilane.

Bevorzugt ist das mindestens eine Halogensilan der generischen Formel SiₙX₂ₙ₊₂ eine Verbindung ausgewählt aus der Gruppe der Octahalogentrisilane oder der Dekahalogentetrasilane, d.h. der Verbindungen der generischen Formel Si₃X₈ bzw. S₁₄X₁₀ mit X = F, Cl, Br und/oder I, oder Mischungen aus den genannten Silanen.

Ganz besonders bevorzugt sind Octahalogentrisilane. Von diesen Verbindungen sind wiederum Octafluortrisilan, Octachlortrisilan, Octabromtrisilan, und Octaiodtrisilan, d.h. die Verbindungen der generischen Formel Si₃X₈ mit X = F, Cl, Br oder I, besonders bevorzugt. Der Einsatz von Octachlortrisilan hat bei dem erfindungsgemäßen Verfahren den Vorteil, dass als primäres Verfahrensprodukt (neben SiX₄) Neopentasilan in wesentlich höheren Ausbeuten und in wesentlich höherer Reinheit als nach anderen Verfahren gemäß dem Stand der Technik hergestellt werden kann. Ganz besonders bevorzugt wird für das erfindungsgemäße Verfahren ein Gemisch aus Octachlortrisilan und Dekachlortetrasilan eingesetzt, wobei der Anteil an Octachlortrisilan in der Regel mindestens 20 Gew.-%, bevorzugt mindestens 80 Gew.-%, bezogen auf das Gemisch, beträgt.

Der Anteil des mindestens einen Halogensilans an dem bei dem Verfahren eingesetzten Reaktionsgemisch beträgt vorzugsweise mindestens 60, bevorzugt mindestens 80 Gew.-% bezogen auf die Gesamtmasse des Reaktionsgemisches. Ganz besonders bevorzugt enthält das Reaktionsgemisch nur den mindestens einen Katalysator und das bzw. die Halogensilane.

Bei dem bei dem erfindungsgemäßen Verfahren einsetzbaren Katalysator handelt es sich um einen Katalysator der generischen Formel

**NRR'ₐR"_{b}Y_{c}**

mit a = 0 oder 1, b = 0 oder 1, und c = 0 oder 1, und
Y = 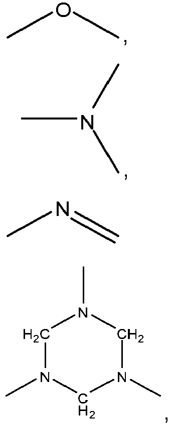 oder
wobei R, R' und R" unabhängig voneinander verschiedene ein- oder zweibindige Reste sein können, die Substituenten des Stickstoffatoms N sind oder mit dem Stickstoffatom - ggf. unter Inkorporation einer Gruppe Y, sofern anwesend - eine (ggf. bi- oder tri-)cyclische Struktur bilden können.

Für den Fall, dass c = 0 und a und b = 1 ist, beschreibt die generische Formel des Katalysators eine bevorzugte Gruppe von Katalysatoren, die tertiäre (ggf. cyclische, bicyclische oder tricyclische) Amine oder stickstoffhaltige Heteroaromaten sein können.

Besonders bevorzugt handelt es sich im Falle von a = b = 1 und c = 0 bei dem Katalysator in diesem Fall um ein tertiäres Amin, d.h. um einen Katalysator der generischen Formel

NRR'R",

bei dem R, R' und R" gleich -Ph, -PhCH₃, -PhC₂H₅, -PhC₃H₇, -CH₂(C₆H₄)CH₃, -CH₂(C₆H₄)C₂H₅, -C₂H₄(C₆H₄)C₂H₅, -C₂H₄(C₆H₄)C₃H₇, -C₃H₆(C₆H₄)-C₃H₇, -C₆H₂(CH₃)₃, -C₆H₃(CH₃)₂, -C₈H₇, -C₈H₆CH₃,-PhNR"'R"", -PhCH₂NR'"R"", -PhC₂H₄NR'"R"", -PhC₃H₆NR'"R"", -CH₂(C₆H₄)-CH₂NR'"R"", -CH₂(C₆H₄)C₂H₄NR'"R"", -C₂H₄(C₆H₄)C₂H₄NR'"R"", -C₂H₄(C₆H₄)C₃H₆NR'"R"", -C₃H₆(C₆H₄)C₃H₆NR'"R"", -CH₂NR'"R"", -C₂H₄NR'"R"", -C₃H₆NR'"R"", -C₄H₈NR'"R"",-C₅H₁₀NR'"R"", -C₆H₁₂NR'"R"", -C₇H₁₄NR'"R"", -C₈H₁₆NR'"R"", -C₉H₁₈NR'"R"" und/oder-C₁₀H₂₀NR'"R"" (mit R'" und R"" = -C₁-C₁₀-Alkyl, -C₁-C₁₀-Aryl und/oder -C₁-C₁₀-Aralkyl) sind, mit der Maßgabe, dass mindestens ein Rest R, R' oder R" nicht -CH₃ ist.

Vorzugsweise können zwei oder drei Reste R, R' und R" im Falle von c = 0 und a = 1 und b = 0 oder 1 gemeinsam ein N einschließendes cyclisches oder bicyclisches, heteroaliphatisches oder heteraromatisches System bilden. Bevorzugt handelt es sich dabei bei den resultierenden Katalysatoren um cyclische oder bicyclische, heteroaliphatische oder heteraromatische Ringsysteme, bevorzugt um Pyrrolidin, Pyrrol, Piperidin, Pyridin, Hexamethylenimin, Azatropiliden oder Chinolin.

Bevorzugt kann (im Falle von a = b = c = 0) R auch ≡C-R'" (mit R'" = -C₁-C₁₀-Alkyl, -C₁-C₁₀-Aryl und/oder -C₁-C₁₀-Aralkyl) sein. Entsprechende Katalysatoren sind Alkylnitrile.

Für den Fall, dass c = 1 ist, beschreibt die generische Formel NRR'ₐR"_{b}Y_{c} verschiedene Katalysatoren mit mindestens einem weiteren Heteroatom mit cyclischer bzw. bi-(ggf. poly)cyclischer Struktur.

Bevorzugte einfach cyclische Strukturen, z. B. Triazole, Oxazine oder Piperazine, resultieren in dem Fall,
dass Y = 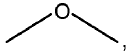 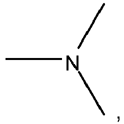 oder 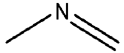 ist und zwei bzw. drei entsprechende Reste R, R' und R" aus der Gruppe bestehend aus -C₁-C₁₂-Alkylen-, -C₁-C₁₂-Arylen-, -C₁-C₁₂-Aralkylen-, -C₁-C₁₂-Heteroalkylen-, -C₁-C₁₂-Heteroarylen- und -C₁-C₁₂-Heteroaralkylenresten und/oder -N= (bevorzugt -CH₂-, -C₂H₄-, -C₃H₆-, -C₄H₈-,-C₅H₁₀-, -C₆H₁₂-, -C₇H₁₄-, -C₈H₁₆-, -C₉H₁₈-, -C₁₀H₂₀-, -Ph-, -PhCH₂-, -PhC₂H₄-, -PhC₃H₆-, -CH₂(C₆H₄)CH₂-, -CH₂(C₆H₄)C₂H₄-, -C₂H₄(C₆H₄)C₂H₄-, -C₂H₄(C₆H₄)C₃H₆-, -C₃H₆(C₆H₄)C₃H₆-,-C₆H(CH₃)₃-, -C₆H₂(CH₃)₂-, -CH=, -CH=CH-, -N=, -N=CH- und/oder -CH=N-) ausgewählt werden.

Der jeweils ggf. bei der Ringbildung nicht beteiligte Rest R, R' bzw. R" ist dann ausgewählt aus der Gruppe bestehend aus -C₁-C₁₂-Alkyl, -C₁-C₁₂-Aryl, -C₁-C₁₂-Aralkyl, -C₁-C₁₂-Aminoalkyl, -C₁-C₁₂-Aminoaryl, -C₁-C₁₂-Aminoaralkyl, bevorzugt -Ph, -PhCH₃, -PhC₂H₅, -PhC₃H₇,-CH₂(C₆H₄)CH₃, -CH₂(C₆H₄)C₂H₅, -C₂H₄(C₆H₄)C₂H₅, -C₂H₄(C₆H₄)C₃H₇, -C₃H₆(C₆H₄)-C₃H₇,-C₆H₂(CH₃)₃, -C₆H₃(CH₃)₂, -C₈H₇,-C₈H₆CH₃, -PhNR"'R"", -PhCH₂NR'"R"", -PhC₂H₄NR'"R"", -PhC₃H₆NR'"R"", -CH₂(C₆H₄)CH₂NR'"R"", -CH₂(C₆H₄)C₂H₄NR'"R"", -C₂H₄(C₆H₄)C₂H₄NR'"R"", -C₂H₄(C₆H₄)C₃H₆NR'"R"", -C₃H₆(C₆H₄)C₃H₆NR'"R"", -CH₂NR'"R"", -C₂H₄NR'"R"",-C₃H₆NR'"R"", -C₄H₈NR'"R"", -C₅H₁₀NR'"R"", -C₆H₁₂NR'"R"", -C₇H₁₄NR'"R"",-C₈H₁₆NR'"R"",-C₉H₁₈NR'"R"" und/oder -C₁₀H₂₀NR'"R"" (mit R'" und R"" = -C₁-C₁₀-Alkyl, -C₁-C₁₀-Aryl und/oder-C₁-C₁₀-Aralkyl).

Ganz besonders bevorzugt handelt es sich bei dem Katalysator der generischen Formel NRR'ₐR"_{b}Y_{c} mit c = 1 um eine bi- oder polycyclische Aminverbindung. Bi- oder polycyclische Aminverbindungen resultieren für den Fall, dass
Y = 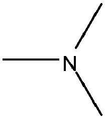 oder 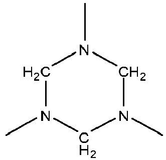 ist
und eine entsprechende Auswahl der Reste R, R' und R" aus der Gruppe bestehend aus -C₁-C₁₂-Alkylen-, -C₁-C₁₂-Arylen-, -C₁-C₁₂-Aralkylen-, -C₁-C₁₂-Heteroalkylen-, -C₁-C₁₂-Heteroarylen-und -C₁-C₁₂-Heteroaralkylenresten und/oder -N= getroffen wird. Weiter bevorzugt sind die Reste R, R' und R" ausgewählt aus der Gruppe bestehend aus -CH₂-, -C₂H₄-, -C₃H₆-, -C₄H₈-,-C₅H₁₀-, -C₆H₁₂-, -C₇H₁₄-, -C₈H₁₆-, -C₉H₁₈-, -C₁₀H₂₀-, -Ph-, -PhCH₂-, -PhC₂H₄-, -PhC₃H₆-, -CH₂(C₆H₄)CH₂-, -CH₂(C₆H₄)C₂H₄-, -C₂H₄(C₆H₄)C₂H₄-, -C₂H₄(C₆H₄)C₃H₆-, -C₃H₆(C₆H₄)C₃H₆-,-C₆H(CH₃)₃-, -C₆H₂(CH₃)₂-, -CH=, -CH=CH-, -N=, -N=CH- und/oder -CH=N- Ganz besonders bevorzugte Katalysatoren sind Azabicycloalkane und Piperazine, insbesondere Diazabicyclooctan und N,N-1,4-Dimethylpiperazin.

Die besten Ergebnisse können erzielt werden, wenn bei dem erfindungsgemäßen Verfahren Katalysatoren ausgewählt aus der Gruppe an Verbindungen bestehend aus cyclischen, bicyclischen oder polycyclischen Aminen mit oder ohne weiteren Heteroatomen eingesetzt werden.

Noch weiter bevorzugt kann als Katalysator Diazabicyclooctan, Pyridin und N,N-1,4-Dimethylpiperazin eingesetzt werden. Diese Katalysatoren eignen sich besonders gut dazu, die Umsetzung von Octahalogentrisilanen, Dekahalogentetrasilanen oder Gemischen hieraus zu den entsprechenden Tetrakis(trihalosilyl)silanen (Si(SiX₃)₄) zu katalysieren.

Ebenfalls Gegenstand der vorliegenden Erfindung ist somit ein Verfahren zur Herstellung von Neopentasilan, bei dem
a)
   i) mindestens ein Octahalogentrisilan der generischen Formel Si₃X₈ mit X = F, Cl, Br und/oder I, Dekahalogentetrasilan der generischen Formel Si₄X₁₀ mit X= F, Cl, Br und/oder I oder Gemisch hieraus mit
   ii) mindestens einem Katalysator ausgewählt aus der Gruppe bestehend aus Diazabicyclooctan, Pyridin und N,N-1,4-Dimethylpiperazin unter Bildung eines Gemisches umfassend mindestens ein Halogensilan der generischen Formel Si₅X₁₂ (mit X = F, Cl, Br und/oder I) und SiX₄ (mit X = F, Cl, Br und/oder I) umgesetzt wird,
b) das mindestens eine Halogensilan der generischen Formel Si₅X₁₂ unter Bildung von Neopentasilan der generischen Formel Si₅H₁₂ hydriert wird,
c) das Neopentasilan der generischen Formel Si₅H₁₂ von partiell halogenierten Hydridosilanen der allgemeinen Formel Si₅H₁₂-_{y}X_{y} (mit 1 < y < 11) abgetrennt wird und
d) optional die in Schritt c) abgetrennten partiell halogenierten Hydridosilane der allgemeinen Formel Si5H12-yXy (mit 1 < y < 11) erneut hydriert werden.

Der Anteil des mindestens einen Katalysators, bezogen auf die eingesetzte Menge an Chlorsilan beträgt bei dem erfindungsgemäßen Verfahren zur Herstellung von Hydridosilane, insbesondere Neopentasilan, bevorzugt zwischen 0,001 und 1 Gew.-%.

Der Katalysator kann dabei als Reinsubstanz oder als Aufschlämmung in einem Lösemittel wie z. B. Diethylether, bevorzugt in Anteilen des Katalysators von 1 - 25 Gew.-% bezogen auf die Gesamtmasse der Aufschlämmung, eingesetzt werden.

Die Reaktion kann in An- oder Abwesenheit eines Lösemittels erfolgen. Bevorzugt wird das erfindungsgemäße Verfahren ohne Lösemittel durchgeführt. Wird es doch in Gegenwart eines Lösemittels durchgeführt, können als bevorzugte Lösemittel Lösemittel ausgewählt aus der Gruppe bestehend aus linearen, verzweigten oder cyclischen gesättigten, ungesättigten oder aromatischen Kohlenwasserstoffen mit einem bis 18 Kohlenstoffatomen (ggf. partiell oder vollständig halogeniert), Ethern, Ketonen und Estern eingesetzt werden. Besonders bevorzugt sind n-Pentan, n-Hexan, n-Heptan, n-Oktan, n-Dekan, Dodekan, Tetradecan, Hexadecan, Cyclohexan, Cyclooctan, Cyclodekan, Dicyclopentan, Benzol, Toluol, m-Xylol, p-Xylol, Mesitylen, Tetrahydronaphtalin, Decahydronaphtalin, Diethylether, Dipropylether, Ethylenglycoldimethylether, Ethylenglycoldiethylether, Ethylenglycolmethylethylether, Diethylenglycoldimethylether, Diethylenglycoldiethylether, Diethylenglycolmethylethylether, Tetrahydrofuran, Aceton, p-Dioxan, Acetonitril, Dimethylformamid, Dimethylsulfoxid, Dichlormethan und Chloroform. Besonders gut einsetzbare Lösemittel sind die Kohlenwasserstoffe n-Pentan, n-Hexan, n-Hexan, n-Oktan, n-Dekan, Dodekan, Cyclohexan, Cyclooctan, Cyclodekan, Benzol, Toluol, m-Xylol, p-Xylol, Mesitylen. Das Lösemittel kann 0,01 bis 90 Gew.% der Gesamtmasse ausmachen.

Die katalysatorunterstützte Umsetzung des Halogensilans der generischen Formel SiₙX₂ₙ₊₂ erfolgt bevorzugt bei Temperaturen von -78 bis 300 °C und Drücken von 1 mbar bis 5 bar. Besonders bevorzugt erfolgt die katalysatorunterstützte Umsetzung des Halogensilans bei 10 - 50 °C und 900 bis 1100 mbar.

Nach der Bildung des Gemisches enthaltend mindestens ein Halogensilan der generischen Formel SiₘX₂ₘ₊₂ (mit m > n und X = F, Cl, Br und/oder I) und SiX₄ kann dies Gemisch prinzipiell ohne eine weitere Aufreinigung für die nachfolgende Hydrierung eingesetzt werden.

Bevorzugt wird jedoch das entstandene Tetrahalogensilan vor der Hydrierung von dem entstandenen Halogensilan der generischen Formel SiₘX₂ₘ₊₂ abgetrennt. Weiter bevorzugt erfolgt dies über ein Abdestillieren bzw. Abziehen von SiX₄ bei Temperaturen von -30 bis +100 °C und Drücken von 0,01 bis 1100 mbar, bevorzugt bei Temperaturen von +30 bis +60 °C und Drücken von 0,02 bis 1,0 mbar.

Das mindestens eine Halogensilan der generischen Formel SiₘX₂ₘ₊₂ wird in den Schritten b) und d) unter Bildung eines Hydridosilans der generischen Formel SiₘH₂ₘ₊₂ hydriert. Bevorzugt erfolgt dies unter Einsatz mindestens eines Hydrierungsmittels ausgewählt aus der Gruppe der Metallhydride eines Metalls der 1. bis 3. Hauptgruppe (insbesondere Alkali- oder Erdalkalimetallhydride) oder der Gruppe der hydridischen Verbindungen bestehend aus LiAlH₄, NaBH₄, iBu₂AlH. Besonders bevorzugt handelt es sich bei dem Hydrierungsmittel um iBu₂AlH.

Auch unter den nach dem erfindungsgemäßen Verfahren herstellbaren Hydridosilanen sind Verbindungen zu verstehen, die im Wesentlichen lediglich Silicium- und Wasserstoffatome enthalten. Diese Hydridosilane können gasförmig, flüssig oder fest sein und sind - im Falle von Feststoffen - im Wesentlichen löslich in Lösemitteln wie Toluol oder Cyclohexan oder in flüssigen Silanen wie Cyclopentasilan. Als Beispiele seien Disilan, Trisilan, Cyclopentasilan und Neopentasilan genannt. Auch diese Hydridosilane können eine lineare oder verzweigte Struktur mit Si-H-Bindungen aufweisen. Das erfindungsgemäße Verfahren eignet sich besonders gut zur Herstellung verzweigter Hydridosilane. Insbesondere eignet es sich besonders gut bei Wahl geeigneter Edukte zur Herstellung von Neopentasilan.

In Schritt b) wird das Hydriermittel zur Erzielung besonders guter Ergebnisse in H-Äquivalent-Anteilen von 1,0 - 1,5 bevorzugt 1,05-1,2 bezogen auf die zu hydrierenden Halogenatome des Halogensilans eingesetzt.
In Schritt d) kann ein geringerer Anteil an Hydriermittel eingesetzt werden, um eine vollständige Hydrierung zu erzielen. Bevorzugt wird in Schritt d) ein H-Äquivalent-Anteil von 0,05 -0,5, bevorzugt 0,1-0,3, bezogen auf die ursprünglich in Schritt b) zu hydrierenden Halogenatome des Halogensilans eingesetzt.

Auch die Hydrierung kann in An- oder Abwesenheit eines Lösemittels erfolgen. Bevorzugt wird die Hydrierung in Gegenwart eines Lösemittels durchgeführt. Bevorzugt einsetzbare Lösemittel können auswählt werden aus der Gruppe bestehend aus linearen, verzweigten oder cyclischen gesättigten, ungesättigten oder aromatischen Kohlenwasserstoffen mit einem bis 18 Kohlenstoffatomen und Ethern. Besonders bevorzugt sind n-Pentan, n-Hexan, n-Heptan, n-Oktan, n-Dekan, Dodekan, Cyclohexan, Cyclooctan, Cyclodekan, Dicyclopentan, Benzol, Toluol, m-Xylol, p-Xylol, Mesitylen, Tetrahydronaphtalin, Decahydronaphtalin, Diethylether, Dipropylether, Ethylenglycoldimethylether, Ethylenglycoldiethylether, Ethylenglycolmethylethylether, Diethylenglycoldimethylether, Diethylenglycoldiethylether, Diethylenglycolmethylethylether, Tetrahydrofuran, p-Dioxan, Acetonitril,. Besonders gut einsetzbare Lösemittel sind die Kohlenwasserstoffe n-Pentan, n-Hexan, n-Hexan, n-Oktan, n-Dekan, Dodekan, Tetradecan, Hexadecan, Cyclohexan, Cyclooctan, Cyclodekan, Benzol, Toluol, m-Xylol, p-Xylol, Mesitylen. In einer besonders bevorzugten Variante kann in dem Falle, dass das verwendete Hydriermittel i-Bu₂AlH ist, dass bei der Hydrierung entstehende flüssige i-Bu₂AlCl als Lösemittel dienen. Das Lösemittel kann 0,01 bis 90 Gew.-% der Gesamtmasse ausmachen.

Die Hydrierung des Halogensilans der generischen Formel SiₘX₂ₘ₊₂ erfolgt bevorzugt bei Temperaturen von -78 bis 300 °C und Drücken von 500 mbar bis 5 bar. Besonders bevorzugt erfolgt die Hydrierung bei -10 - 30 °C und 900 bis 1100 mbar.

Die nach Abschluss von Schritt b) erforderliche Separation der dann vorliegenden Hydridosilane und der partiell halogenierten Hydridosilane (Schritt c)) kann prinzipiell beliebig erfolgen. Bevorzugt, wegen der geringeren thermischen Belastung des Gemischs und somit verminderter Zersetzung, Weiter- oder Folgereaktion, wird die Separation in einem Verdampfer mit kurzen Verweilzeiten und niedrigem Verdampfungsdruck durchgeführt. Hierzu können Dünnschichtverdampfer oder auch Kurzwegverdampfer, auch Molekulardestillation genannt, verwendet werden. Typische Verfahrendrücke hierbei sind < 5 mbar. Die Produkttemperatur im Verdampfer sollte nicht > 100 °C sein, um eine Produktzersetzung zu verhindern. Das hierdurch gewonnene Destillat wird anschließend in einem Rektifizierungsprozess weiter aufgereinigt. Das Sumpfprodukt kann der Wiederverwertung als Lösemittel für die Reaktion zugeführt werden. Die hierbei anfallenden Leichtsieder, die in Kühlfallen aufgefangen werden, werden entweder als Wertprodukt verwendet oder, abhängig vom Chloridgehalt, verworfen.
Die weitere Aufreinigung des bei der Verdampfung erhaltenen Destillates erfolgt in einer Rektifizierkolonne. Hierbei kann eine kontinuierliche oder batchweise Durchführung erfolgen. Die Rektifikation erfolgt in einem Temperaturbereich zwischen 50 und 100 °C im Sumpf bzw. der Blase der Rektifiziereinrichtung. Sie kann aber auch bis zu 150 °C angehoben werden. Der hierbei einzustellende Rektifizierdruck liegt in einem Bereich von 1 - 100 mbar.
Bei einer Batchrektifikation erfolgt die Abnahme der Wertprodukte fraktioniert. Bei einer kontinuierlichen Aufarbeitung sind mindestens zwei Kolonnen notwendig, wobei das Wertprodukt in der zweiten Kolonne als Destillat abgenommen wird.
Dabei bleibt das hauptsächlich entstandene abreagierte Hydriermittel im Sumpf zurück und die partiell halogenierten Hydridosilane fallen aufkonzentriert im Destillat an.

Nach Abschluss von Schritt d) wird das Reaktionsgemisch nach der erfolgten zweiten Hydrierung bevorzugt destillativ aufgereinigt.

Zur Erzielung besonders reiner Produkte kann im Anschluss an die destillative Aufreinigung eine Feinreinigung erfolgen. Die Feinreinigung kann z. B. durch geeignete adsorptive oder chromatographische Verfahren erfolgen.

Die folgenden Beispiele sollen den Gegenstand der Erfindung weiter ergänzend erläutern, ohne selbst beschränkend zu wirken.

### Beispiele:

### Beispiel 1: Synthese höherer Hydridosilane aus Halogensilanen und Kondensation der Hydridosilane (H-Äquivalent-Anteil des Hydriermittels: 1,2)

Im ersten Schritt werden bei 20°C und 1 bar unter Schutzgasatmosphäre 304 g flüssiges Perchlorsilangemisch (> 75 Gew.-% Si₃Cl₈, > 22 Gew.-% Si₄Cl₁₀) in einem Reaktionsgefäß unter Rühren mit 46,7 g Hexan und 0,9 g Diazabicyclo[2.2.2]octan, gelöst in 7,1 g Diethylether, versetzt. Der Reaktorinhalt wird durch Eiskühlung auf Temperaturen kleiner 20 °C temperiert. Das Gemisch reagiert innerhalb von 40 Stunden zum Feststoff Si₅Cl₁₂ und dem Nebenprodukt SiCl₄.
Nach dem Reaktionsschritt werden die Leichtsieder (Hexan, Diethylether) und das Nebenprodukt SiCl₄ bei 50 °C unter Vakuum (200 bis 1 mbar) aus dem Reaktionsgemisch abgetrennt. Man erhält 243,2 g Si₅Cl₁₂.
42,7 g des erhaltenen Si₅Cl₁₂ werden unter Schutzgasatmosphäre in 20,0 g Di-isobutylaluminiumchlorid dispergiert. Danach werden 149 g des Hydrierungsmittels Di-isobutylaluminiumhydrid sukzessive unter Rühren zugegeben. Aufgrund der Reaktionsexothermie wird der Rektor bei der Hydrierung durch Eiskühlung temperiert, so dass eine Temperatur von 20 °C im Reaktor nicht überschritten wird. Das Reaktionsgemisch wird für weitere 18 Stunden unter Eiskühlung gerührt.
Danach werden bei 20°C unter Normaldruck (1,013 bar) und Schutzgasatmosphäre flüchtige Bestandteile wie z. B. SiH₄ aus dem Reaktionsgemisch entfernt. Im nächsten Schritt werden die Hydridosilane bei 20 °C unter Vakuum (Druck < 1 mbar) durch Verdampfung vom Dispersionsmittel Di-isobutylaluminiumchlorid und nicht abreagiertem Di-isobutylaluminiumhydrid abgetrennt. Das Kondensat enthält die Hydridosilane.

Die qualitative Bestimmung der Hydridosilane im Kondensat erfolgte mittels GC-MS Analytik. Das Kondensat enthält Hydridosilane mit einem Anteil von > 98,0 Flächen %.

Gewichtsbezogene Ausbeute (g Hydridosilane als Kondensat pro g eingesetztem Perchlorsilangemisch): 20,8 % (11,1 g Hydridosilane / 53,4 g Perchlorsilangemisch)

Chloridgehalt des als Destillat erhaltenen Hydridosilans: 470 ppm Chlorid.

### Beispiel 2: Synthese höherer Hydridosilane aus Halogensilanen und deren thermische Aufreinigung (H-Äquivalent-Anteil des Hydriermittels: 1,1)

Im ersten Schritt werden bei 20°C und 1 bar unter Schutzgasatmosphäre 1567 g flüssiges Perchlorsilangemisch (> 75 Gew.-% Si₃Cl₈, > 22 Gew.-% Si₄Cl₁₀) in einem Reaktionsgefäß unter Rühren mit 225,7 g Hexan und 1,85 g Diazabicyclo[2.2.2]octan, gelöst in 14,2 g Diethylether, versetzt. Der Reaktorinhalt wird durch Eiskühlung auf Temperaturen kleiner 20 °C temperiert. Das Gemisch reagiert innerhalb von 40 Stunden zum Feststoff Si₅Cl₁₂ und dem Nebenprodukt SiCl₄. Nach dem Reaktionsschritt wird das vorwiegend Si₅Cl₁₂ enthaltene Gemisch mit 1015 g Di-isobutylaluminiumchlorid als Dispersionsmittel versetzt. Nachfolgend werden die Leichtsieder (Hexan, Diethylether) und das Nebenprodukt SiCl₄ bei 50 °C unter Vakuum (200 bis 1 mbar) abgetrennt.
Das in Di-isobutylaluminiumchlorid dispergierte Si₅Cl₁₂ wird unter Schutzatmosphäre sukzessive unter Rühren mit 4137 g des Hydrierungsmittels Di-isobutylaluminiumhydrid versetzt. Aufgrund der Reaktionsexothermie wird der Rektor bei der Hydrierung durch Eiskühlung temperiert, so dass eine Temperatur von 20 °C im Reaktor nicht überschritten wird. Das Reaktionsgemisch wird für weitere 18 Stunden unter Eiskühlung gerührt.
Danach werden bei 20°C unter Normaldruck (1,013 bar) und Schutzgasatmosphäre flüchtige Bestandteile wie z. B. SiH₄ aus dem Reaktionsgemisch entfernt. In einem Kurzwegverdampfer werden unter Vakuum (Druck < 1 mbar) bei 72 °C Di-isobutylaluminiumchlorid und nicht abreagiertes Di-Isobutylaluminiumhydrid als Sumpfprodukt abgetrennt. Das Kopfprodukt (Destillat) aus dem Kurzwegverdampfer wird in einem Rektifizierungsschritt mit Hilfe einer Batchrektifikation bei Drücken zwischen 10 und 100 mbar und einer Temperatur in der Verdampferblase von 95 °C weiter aufgereinigt. Das Hydridosilan wird als Destillat aus der Batchrektifikation entnommen.

Die qualitative Bestimmung der Hydridosilane im Destillat erfolgte mittels GC-MS Analytik. Das Destillat enthält Hydridosilane mit einem Anteil von > 99,0 Flächen %.

Gewichtsbezogene Ausbeute (g Hydridosilane als Destillat pro g eingesetztem Perchlorsilangemisch): 14,6 % (228 g Hydridosilane / 1567 g Perchlorsilangemisch)

Chloridgehalt des als Destillat erhaltenen Hydridosilans: 41 ppm Chlorid.

### Beispiel 3: Nachhydrierung höherer Hydridosilane zur Reduzierung des Chloridgehalts und deren thermische Aufreinigung

Destillatfraktionen aus Beispiel 2 mit höheren Chloridwerten sind vereinigt worden und der Chloridwert dieses Gemisches ist bestimmt worden. Dieses Hydridosilangemisch wird im hier beschriebenen Versuch als Edukt eingesetzt.
185 g Hydridosilangemisch (Hydridosilane > 99,0 Flächen %) mit einem Chloridgehalt von 457 ppm werden unter Schutzgasatmosphäre sukzessive unter Rühren mit 84 g Di-isobutylaluminiumhydrid versetzt. Aufgrund der Reaktionsexothermie wird der Rektor bei der Hydrierung durch Eiskühlung temperiert, so dass eine Temperatur von 20 °C im Reaktor nicht überschritten wird. Das Reaktionsgemisch wird für weitere 18 Stunden unter Eiskühlung gerührt.
Nach der Hydrierung werden bei 20°C unter Normaldruck (1,013 bar) flüchtige Bestandteile wie z. B. SiH₄ aus dem Reaktionsgemisch entfernt. Das Reaktionsprodukt wird in einem Rektifizierungsschritt mit Hilfe einer Batchrektifikation bei Drücken zwischen 10 und 100 mbar und einer Temperatur in der Verdampferblase von 95 °C weiter aufgearbeitet. Das Destillat enthält das gewünschte Hydridosilan.

Gewichtsbezogene Ausbeute (g Hydridosilane als Destillat pro g eingesetztem Hydridosilangemisch): 87,3 %. (161,5 g Hydridosilane als Destillat/ 185 g Hydridosilangemisch)

Chloridgehalt des als Destillat erhaltenen Hydridosilans: 16 ppm Chlorid.

Die qualitative Bestimmung der Hydridosilane im Destillat erfolgte mittels GC-MS Analytik. Das Destillat enthält Hydridosilane mit einem Anteil von > 99,0 Flächen %.

## Patentansprüche

1. Verfahren zur Herstellung von Hydridosilanen aus Halogensilanen,
**dadurch gekennzeichnet, dass**
a)
i) mindestens ein Halogensilan der generischen Formel SiₙX₂ₙ₊₂ (mit n ≥ 3 und X = F, Cl, Br und/oder I) und
ii) mindestens ein Katalysator der generischen Formel
NRR'ₐR"_{b}Y_{c}
mit a = 0 oder 1, b = 0 oder 1, und c = 0 oder 1, und
Y = 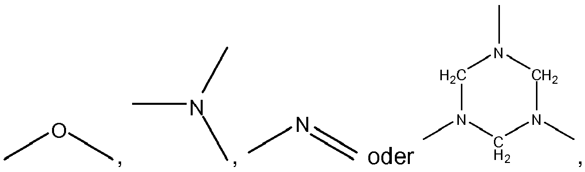 wobei
aa) - R, R' und/oder R" gleich -C₁-C₁₂-Alkyl, -C₁-C₁₂-Aryl, -C₁-C₁₂-Aralkyl, -C₁-C₁₂-Aminoalkyl, -C₁-C₁₂-Aminoaryl, -C₁-C₁₂-Aminoaralkyl, und/oder
- zwei oder drei Reste R, R' und R" im Falle von c = 0 gemeinsam ein N einschließendes cyclisches oder bicyclisches, heteroaliphatisches oder heteraromatisches System bilden,
- mit der Maßgabe, dass mindestens ein Rest R, R' oder R" nicht -CH₃ ist
und/oder
bb) - R und R' und/oder R" (im Falle von c = 1) gleich -C₁-C₁₂-Alkylen, -C₁-C₁₂-Arylen, -C₁-C₁₂-Aralkylen, -C₁-C₁₂-Heteroalkylen, -C₁-C₁₂-Heteroarylen, -C₁-C₁₂-Heteroaralkylen und/oder -N= ist,
oder
cc) - (im Falle von a = b = c = 0) R = ≡C-R'" (mit R'" = -C₁-C₁₀-Alkyl, -C₁-C₁₀-Aryl und/oder -C₁-C₁₀-Aralkyl) ist,
unter Bildung eines Gemisches umfassend mindestens ein Halogensilan der generischen Formel SiₘX₂ₘ₊₂ (mit m > n und X = F, Cl, Br und/oder I) und SiX₄ (mit X = F, Cl, Br und/oder I) umgesetzt werden,
und
b) das mindestens eine Halogensilan der generischen Formel SiₘX₂ₘ₊₂ unter Bildung eines Hydridosilans der generischen Formel SiₘH₂ₘ₊₂ hydriert wird,
c) das Hydridosilan der generischen Formel SiₘH₂ₘ₊₂ von partiell halogenierten Hydridosilanen der allgemeinen Formel SiₘH(_{2m+2-y})X_{y} (mit 1 < y < 2m+1) abgetrennt wird und
d) optional die in Schritt c) abgetrennten partiell halogenierten Hydridosilane der allgemeinen Formel SiₘH(_{2m+2-y})X_{y} (mit 1 < y < 2m+1) erneut hydriert werden.

2. Verfahren nach einem Anspruch 1
**dadurch gekennzeichnet, dass**
das Halogensilan der generischen Formel SiₙX₂ₙ₊₂ ein lineares Silan ist.

3. Verfahren nach Anspruch 1 oder 2,
**dadurch gekennzeichnet, dass**
das mindestens eine Halogensilan eine Verbindung ausgewählt aus der Gruppe der Verbindungen mit der generischen Formel Si₃X₈ und/oder Si₄X₁₀ mit X = F, Cl, Br und/oder I ist.

4. Verfahren nach einem der vorhergehenden Ansprüche,
**dadurch gekennzeichnet, dass**
der Katalysator ausgewählt aus der Gruppe an Verbindungen bestehend aus cyclischen, bicyclischen oder polycyclischen Aminen mit oder ohne weiteren Heteroatomen ist.

5. Verfahren nach Anspruch 4,
**dadurch gekennzeichnet, dass**
der Katalysator Diazabicyclooctan, Pyridin oder N,N-1,4-Dimethylpiperazin ist.

6. Verfahren nach einem der vorhergehenden Ansprüche,
**dadurch gekennzeichnet, dass**
vor der Hydrierung eine Abtrennung des mindestens einen Halogensilans der generischen Formel SiₘX₂ₘ₊₂ von SiX₄ durch Abdestillieren bzw. Abziehen von SiX₄ bei Temperaturen von -30 bis +100 °C und Drücken von 0,01 bis 1100 mbar erfolgt.

7. Verfahren nach einem der vorhergehenden Ansprüche,
**dadurch gekennzeichnet, dass**
die Hydrierung durch Zugabe mindestens eines Hydrierungsmittels ausgewählt aus der Gruppe der Metallhydride eines Metalls der 1. bis 3. Hauptgruppe oder der Gruppe der hydridischen Verbindungen bestehend aus LiAlH₄, NaBH₄, iBu₂AlH erfolgt.

8. Verfahren nach einem der vorhergehenden Ansprüche,
**dadurch gekennzeichnet, dass**
die Hydrierung in den Schritten b) und d) in Gegenwart eines Lösemittels durchgeführt wird.

## Claims

1. Process for preparing hydridosilanes from halosilanes,
**characterized in that**
a)
i) at least one halosilane of the generic formula SiₙX₂ₙ₊₂ (where n ≥ 3 and X = F, Cl, Br and/or I) and
ii) at least one catalyst of the generic formula
NRR'ₐR"_{b}Y_{c}
where a = 0 or 1, b = 0 or 1, and c = 0 or 1, and
Y = 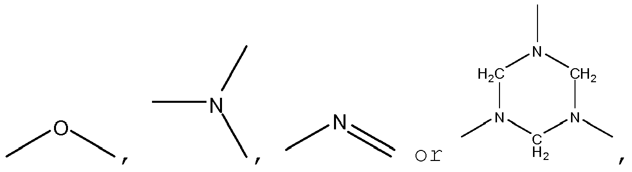 where
aa) - R, R' and/or R" are each -C₁-C₁₂-alkyl, -C₁-C₁₂-aryl, -C₁-C₁₂-aralkyl, -C₁-C₁₂-aminoalkyl, -C₁-C₁₂-aminoaryl, -C₁-C₁₂-aminoaralkyl, and/or
- two or three R, R' and R" radicals in the case that c = 0 together form a cyclic or bicyclic, heteroaliphatic or heteroaromatic system including N,
- with the proviso that at least one R, R' or R" radical is not -CH₃
and/or
bb) - R and R' and/or R" (in the case that c = 1) are each -C₁-C₁₂-alkylene, -C₁-C₁₂-arylene, -C₁-C₁₂-aralkylene, -C₁-C₁₂-heteroalkylene, -C₁-C₁₂-heteroarylene, -C₁-C₁₂-heteroaralkylene and/or -N=, or
cc) - (in the case that a = b = c = 0) R = ≡C-R''' (where R''' = -C₁-C₁₀-alkyl, -C₁-C₁₀-aryl and/or -C₁-C₁₀-aralkyl),
are converted to form a mixture comprising at least one halosilane of the generic formula SiₘX₂ₘ₊₂ (where m > n and X = F, Cl, Br and/or I) and SiX₄ (where X = F, Cl, Br and/or I),
and
b) the at least one halosilane of the generic formula SiₘX₂ₘ₊₂ is hydrogenated to form a hydridosilane of the generic formula SiₘH₂ₘ₊₂,
c) the hydridosilane of the generic formula SiₘH₂ₘ₊₂ is separated from partially halogenated hydridosilanes of the general formula SiₘH(_{2m+2-y})X_{y} (where 1 < y < 2m+1), and
d) optionally, the partially halogenated hydridosilanes of the general formula SiₘH(_{2m+2-y})X_{y} (where 1 < y < 2m+1) separated in step c) are hydrogenated again.

2. Process according to Claim 1,
**characterized in that**
the halosilane of the generic formula SiₙX₂ₙ₊₂ is a linear silane.

3. Process according to Claim 1 or 2,
**characterized in that**
the at least one halosilane is a compound selected from the group of the compounds with the generic formula Si₃X₈ and/or Si₄X₁₀ where X = F, Cl, Br and/or I.

4. Process according to any one of the preceding claims,
**characterized in that**
the catalyst is selected from the group of compounds consisting of cyclic, bicyclic and polycyclic amines with or without further heteroatoms.

5. Process according to Claim 4,
**characterized in that**
the catalyst is diazabicyclooctane, pyridine or N,N-1,4-dimethylpiperazine.

6. Process according to any one of the preceding claims,
**characterized in that**
the hydrogenation is preceded by removal of the at least one halosilane of the generic formula SiₘX₂ₘ₊₂ from SiX₄ by distillative removal or drawing off SiX₄ at temperatures of -30 to +100°C and pressures of 0.01 to 1100 mbar.

7. Process according to any one of the preceding claims,
**characterized in that**
the hydrogenation is effected by adding at least one hydrogenating agent selected from the group of the metal hydrides of a metal of main groups 1 to 3 or the group of hydridic compounds consisting of LiAlH₄, NaBH₄, iBu₂AlH.

8. Process according to any one of the preceding claims,
**characterized in that**
the hydrogenation in steps b) and d) is carried out in the presence of a solvent.

## Revendications

1. Procédé de fabrication d'hydridosilanes à partir d'halogénosilanes, **caractérisé en ce que**
a)
i) au moins un halogénosilane de formule générique SiₙX₂ₙ₊₂ (avec n ≥ 3 et X = F, Cl, Br et/ou I) et
ii) au moins un catalyseur de formule générique
NRR'ₐR"_{b}Y_{c}
avec a = 0 ou 1, b = 0 ou 1, et c = 0 ou 1, et
Y = 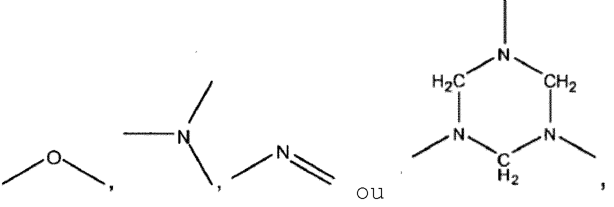
aa) - R, R' et/ou R" représentant alkyle en C₁-C₁₂, aryle en C₁-C₁₂, aralkyle en C₁-C₁₂, aminoalkyle en C₁-C₁₂, aminoaryle en C₁-C₁₂, aminoaralkyle en C₁-C₁₂,
et/ou
- deux ou trois radicaux R, R' et R" lorsque c = 0 formant ensemble un système hétéroaliphatique ou hétéroaromatique, cyclique ou bicyclique comprenant N,
- à condition qu'au moins un radical R, R' ou R" ne représente pas -CH₃,
et/ou
bb) - R et R' et/ou R" (lorsque c = 1) représentant alkylène en C₁-C₁₂, arylène en C₁-C₁₂, aralkylène en C₁-C₁₂, hétéroalkylène en C₁-C₁₂, hétéroarylène en C₁-C₁₂, hétéroaralkylène en C₁-C₁₂ et/ou -N=,
ou
cc) - (lorsque a = b = c = 0) R = ≡C-R''' (avec R''' = alkyle en C₁-C₁₀, aryle en C₁-C₁₀ et/ou aralkyle en C₁-C₁₀), sont mis en réaction avec formation d'un mélange comprenant au moins un halogénosilane de formule générique SiₘX₂ₘ₊₂ (avec m > n et X = F, Cl, Br et/ou I) et SiX₄ (avec X = F, Cl, Br et/ou I),
et
b) ledit au moins un halogénosilane de formule générique SiₘX₂ₘ₊₂ est hydrogéné avec formation d'un hydridosilane de formule générique SiₘH₂ₘ₊₂,
c) l'hydridosilane de formule générique SiₘH₂ₘ₊₂ est séparé des hydridosilanes de formule générale SiₘH(_{2m+2-y})X_{y} partiellement halogénés (avec 1 < y < 2m+1), et
d) les hydridosilanes de formule générale SiₘH(_{2m+2-y})X_{y} partiellement halogénés (avec 1 < y < 2m+1) séparés à l'étape c) sont éventuellement de nouveau hydrogénés.

2. Procédé selon la revendication 1, **caractérisé en ce que** l'halogénosilane de formule générique SiₙX₂ₙ₊₂ est un silane linéaire.

3. Procédé selon la revendication 1 ou 2, **caractérisé en ce que** ledit au moins un halogénosilane est un composé choisi dans le groupe constitué par les composés de formule générique Si₃X₈ et/ou Si₄X₁₀ avec X = F, Cl, Br et/ou I.

4. Procédé selon l'une quelconque des revendications précédentes, **caractérisé en ce que** le catalyseur est choisi dans le groupe de composés constitué par les amines cycliques, bicycliques ou polycycliques avec ou sans hétéroatomes supplémentaires.

5. Procédé selon la revendication 4, **caractérisé en ce que** le catalyseur est le diazabicyclooctane, la pyridine ou la N,N-1,4-diméthylpipérazine.

6. Procédé selon l'une quelconque des revendications précédentes, **caractérisé en ce qu'**avant l'hydrogénation, une séparation dudit au moins un halogénosilane de formule générique SiₘX₂ₘ₊₂ de SiX₄ par distillation ou soutirage de SiX₄ à des températures de -30 à +100 °C et des pressions de 0,01 à 1 100 mbar a lieu.

7. Procédé selon l'une quelconque des revendications précédentes, **caractérisé en ce que** l'hydrogénation a lieu par ajout d'au moins un agent d'hydrogénation choisi dans le groupe des hydrures métalliques d'un métal des groupes principaux 1 à 3 ou dans le groupe des composés hydruriques constitué par LiAlH₄, NaBH₄, iBu₂AlH.

8. Procédé selon l'une quelconque des revendications précédentes, **caractérisé en ce que** l'hydrogénation aux étapes b) et d) est réalisée en présence d'un solvant.
